# EUROPÄISCHE PATENTANMELDUNG

(11) **EP 2 123 960 A2**
(43) Veröffentlichungstag der Anmeldung: **25.11.2009**
(21) Anmeldenummer: 09160790.3
(22) Anmeldetag: 20.05.2009
(51) Int. Cl.: F16L 55/033, F24F 13/24

(54) **Schalldämpfereinrichtung**

(30) Priorität: 24.05.2008 DE 202008007002 U
(71) Anmelder: Kapolnek GmbH, 70372 Stuttgart (DE)
(72) Erfinder: Kapolnek, Peter, 71334, Waiblingen (DE)
(74) Vertreter: Bongen, Renaud & Partner

(57) **Zusammenfassung**

Die vorliegende Erfindung betrifft eine Schalldämpfereinrichtung (1) mit zumindest einem schall-, medien- und/oder schmutzführenden Kanal (2), der an einem Innenbereich zumindest bereichsweise mit schallabsorbierendem Material (3) belegt ist, wobei an der Innenwand eine Halteeinrichtung (5) zur austauschbaren Halterung eines der Innenwand vorgelagerten Schalldämpferelementes (6), insbesondere einer Schallabsorbtionsplatte vorgesehen ist, und das Schalldämpferelement als Opferelement ausgebildet ist und das schallabsorbierende Material (3) des Innenbereichs vor Feuchtigkeit und/oder Schmutz schützt.

## Beschreibung

Die Erfindung betrifft eine Schalldämpfereinrichtung mit zumindest einem schall- und/oder schmutzführenden Kanal, welcher an einem Innenbereich zumindest bereichsweise mit schallabsorbierendem Material belegt ist. Die Erfindung betrifft außerdem eine mit einer derartigen Schalldämpfereinrichtung ausgestattete staub- und/oder schmutzpartikelführende Anlage, insbesondere eine Entstaubungsanlage.

Aufgrund stetig strenger werdender Emissionsvorschriften, ist es heute üblich, Industrieprozesse jedweder Art schalltechnisch zu dämpfen, um damit deren Akzeptanz innerhalb der Bevölkerung steigern zu können. Durch einen ebenfalls stetig zunehmenden Grad an Lüftung bzw. Klimatisierung von Werkshallen, sind auch Schalldämpfereinrichtungen bekannt, welche beispielsweise stationär auf einem Dach der Werkshalle aufgestellt sind und welche dazu beitragen, die relativ groß dimensionierten Lüftungs- bzw. Klimaanlagen emissionsarm zu gestalten. Zur Schalldämpfung kommen hierbei insbesondere Materialien, wie beispielsweise Mineralfasern, zum Einsatz, mit welchen die Innenbereiche eines vom Schall und/oder von Schmutzpartikeln durchströmten Kanals ausgekleidet sind. Bei großen und stationären staub- und/oder schmutzpartikelführenden Anlagen, insbesondere bei Entstaubungsanlagen, tritt dabei jedoch häufig das Problem auf, dass die mitgeführten Staub- bzw. Schmutzpartikel zu einem oberflächlichen Zusetzen der schallabsorbierenden Materialien führen, wodurch deren Schallabsorptionsgrad deutlich abgesenkt und damit die Wirkung der Schalldämpfereinrichtung deutlich reduziert wird. Bei insbesondere in staub- und/oder schmutzpartikelführenden Anlagen eingesetzten Schalldämpfereinrichtungen ist es somit erforderlich, das schallabsorbierende Material turnusgemäß auszutauschen, um die Funktionsfähigkeit der Schalldämpfereinrichtung aufrecht zu erhalten. Ein derartiges Austauschen des schallabsorbierenden Materials ist dabei jedoch aufwändig und teuer und zudem äußerst unwirtschaftlich, da das schallabsorbierende Material lediglich in seinen, den Staubpartikel ausgesetzten äußeren Randbereichen zugesetzt ist und damit nur dort ausgetauscht werden müsste, während innenliegende Bereich vollständig in Ordnung sind und weiterhin eine hohe Schallabsorbtionsfähigkeit aufweisen.

Die Erfindung beschäftigt sich mit dem Problem, eine Schalldämpfereinrichtung anzugeben, welche insbesondere vorteilhaft in staub- und/oder schmutzpartikelführenden Anlagen einsetzbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Schalldämpfereinrichtung mit zumindest einem Schall-und/oder schmutzführenden Kanal zu schaffen, dessen Innenbereiche mit einem schallabsorbierenden Material belegt sind, wobei diesem schallabsorbierenden Material ein austauschbares und als Opferelement dienendes Schalldämpfer(rahmen)element vorgelagert ist, dessen Austausch im Vergleich zum Austausch des schallabsorbierenden Materials an dem Innenbereich deutlich einfacher möglich ist. Das Schalldämpferelement ist dabei über eine Halteeinrichtung an dem Innenbereich des zumindest einen schallführenden Kanals befestigt, wobei eine Schmutz- bzw. Staubfracht nunmehr vorzugsweise ausschließlich auf bzw. im Schalldämpferelement abgelagert wird und nicht wie bisher in dem schallabsorbierenden Material des Innenbereichsdes staub- und/oder schmutzpartikelführenden Kanals. Lässt die Schalldämpfung mit laufender Betriebsdauer aufgrund des Zusetzens des Schalldämpferelementes mit Schmutz bzw. Staubpartikeln nach, so ist zur Wiederherstellung der vollständigen Schalldämpfungswirkung lediglich ein Austausch des als Opferelement ausgebildeten Schalldämpferelementes erforderlich. Ein derartiger Austausch ist problemlos von ein bis zwei Fachkräften durchführbar und bedarf darüber hinaus keiner zusätzlicher Hebewerkzeuge, wie diese beispielsweise beim Austausch von herkömmlichen Schalldämpferkulissen erforderlich waren. Die Dicke des zumindest einen Schalldämpferelements beträgt dabei wenige Zentimeter, so dass auch ein Austauschen von einer einzigen Fachkraft möglich ist. Zugleich ist mit den vorgehängten bzw. vorgelagerten Schalldämpferelementen auch eine Schonung von Ressourcen möglich, da lediglich die tatsächlich verschmutzten Schalldämpferelemente ausgetauscht werden müssen, während die im übrigen unverschmutzten schallabsorbierenden Materialien der Innenbereiche im schall- und/oder schmutzführenden Kanal bzw. in dem Innenbereich desselben verbleiben können. Bisher wurde das gesamte schallabsorbierende Material des Innenbereichs ausgetauscht, welches jedoch nur in wenigen Zentimetern seines dem Staub- bzw. Schmutzstrom ausgesetzten Randbereichs tatsächlich ausgetauscht hätte werden müssen. Der weiter innenliegende, noch voll funktionsfähige Bereich des schallabsorbierenden Materials wurde ebenfalls ausgetauscht, obwohl dies überhaupt nicht erforderlich gewesen wäre. Mit der erfindungsgemäßen Schalldämpfereinrichtung ist somit eine bezüglich der Wartung deutlich kostengünstigere und einfacher handzuhabende Ausgestaltung verwirklicht, wobei zugleich deutliche Materialeinsparungen an schallabsorbierendem Material möglich sind.

Zweckmäßig weist das Schalldämpferelement ebenfalls schallabsorbierendes Material auf. Dieses schallabsorbierende Material im Schalldämpferelement, welches bspw. als Vlies bzw. Folie ausgebildet sein kann, dient dabei als Opfermaterial, welches dem schmutz- bzw. staubbefrachteten Gasstrom direkt ausgesetzt ist und welches während der Betriebsdauer der Schalldämpfereinrichtung Schmutz bzw. Staub aufnimmt und einlagert, gleichzeitig diesen Schmutz bzw. Staub jedoch vom schallabsorbierenden Material des Kulisseninnenbereichs fernhält, so dass dessen schallabsorbierende Wirkung über lange Zeit aufrechterhalten werden kann.

Bei einer weiteren vorteilhaften Ausführungsform der erfindungsgemäßen Lösung ist die Halteeinrichtung als Kulissenführung mit wenigstens zwei sich gegenüberliegenden Führungsschienen ausgebildet, während das Schalldämpferelement in die Kulissenführung eingreifende Kulissen Steine, Kufen oder Rollen aufweist und über diese leichtgängig entlang der Kulissenführung verstellbar ist. Eine derartige Kulissenführung ermöglicht einen leichten Ein- bzw. Ausbau der Schalldämpferelemente, wodurch wiederum die Wartungskosten der erfindungsgemäßen Schalldämpfereinrichtung auf einem äußerst geringen Niveau gehalten werden können. Selbstverständlich sind auch weitere Anbindungsarten, beispielsweise über Haken denkbar, welche einerseits eine zuverlässige Halterung der Schalldämpferelemente an dem Innenbereich des schall-und/oder schmutzführenden Kanals ermöglichen, andererseits jedoch aber einen leichten Ein- bzw. Ausbau der Schalldämpferelemente gewährleisten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Schalldämpfereinrichtung mit insgesamt drei schall- und/oder medienführenden Kanälen,
- Fig. 2: eine Detaildarstellung einer erfindungsgemäßen Schalldämpfereinrichtung.

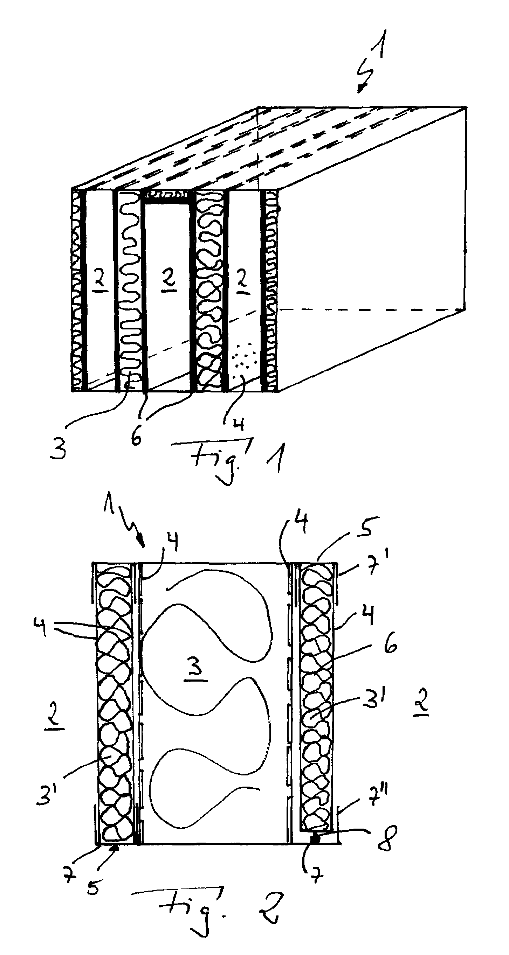

Entsprechend der Fig. 1, weist eine erfindungsgemäße Schalldämpfereinrichtung 1, drei schall-, medien- und/oder schmutzführende Kanäle 2 auf, die an ihren jeweiligen Kulisseninnenbereichen mit einem schallabsorbierenden Material 3, welches bspw. als Vlies bzw. Folie ausgebildet sein kann, belegt sind. Denkbar ist auch, dass das schallabsorbierende Material 3 eine Trennwand zwischen zwei benachbart zueinander angeordneten Kanälen 2 bildet. Zum jeweiligen schall-und/oder schmutzführenden Kanal 2 hin, kann eine Lochplatte 4 einen Abschluss des schallabsorbierenden Materials 3 bilden. Selbstverständlich ist dabei vorzugsweise jeder Innenbereich des jeweiligen schall- und/oder schmutzführenden Kanals 2 mit schallabsorbierendem Material 3 belegt, wobei dies aufgrund der besseren Übersichtlichkeit in Fig. 1 nicht vollständig dargestellt ist.

Die erfindungsgemäße Schalldämpfereinrichtung 1 wird vorzugsweise in staub- und/oder schmutzpartikelführenden Anlagen, insbesondere in so genannten Entstaubungsanlagen, eingesetzt, welche beispielsweise stationär auf einem Dach der zu entstaubenden Räume installiert ist und wobei große Mengen schmutz- bzw. staubbefrachteten Gases durch die Schalldämpfereinrichtung 1 strömen. Die Schmutz- bzw. Staubfracht birgt dabei jedoch die Gefahr, dass die mitgeführten Schmutz- bzw. Staubpartikel das schallabsorbierende Material 3, welches bspw. als Vlies bzw. Folie ausgebildet sein kann, zusetzen und dadurch dessen schallabsorbierende Wirkung erheblich beeinträchtigen. Erfindungsgemäß ist deshalb an zumindest einem Innenbereich des schall- und/oder schmutzführenden Kanals 2 zumindest eine Haltereinrichtung 5 zur austauschbaren Haltung eines des Innenbereichs vorgelagerten Schalldämpferelements 6 vorgesehen (vgl. Fig. 2). Das Schalldämpferelement 6 kann dabei beispielsweise als Schallabsorbtionsplatte ausgebildet sein und dient prinzipiell als Opferelement, welches das schallabsorbierende Material 3 an dem Innenbereich vor einem Zutritt von Feuchtigkeit und/oder Schmutz schützt. Das Schalldämpferelement 6 weist dabei ebenfalls schallabsorbierendes Material 3', beispielsweise mineralischen Faserwerkstoff, Metallwolle und/oder Filz auf.

Im Wartungsfall, das heißt bei einem Unterschreiten eines vordefinierten Schallabsorbtionsgrades, muss dank der erfindungsgemäßen Schalldämpfereinrichtung 1 nunmehr lediglich das/die leicht zu handhabende Schalldämpferelement(e) 6 ausgetauscht und nicht wie bisher das komplette schallabsorbierende Material 3 an der Innenwand, bzw. dem Innenbereich des schall- und/oder medienführenden Kanals 2. Insbesondere ist zum Austausch der Schalldämpferelemente 6 lediglich eine geringe Manpower erforderlich, das heißt es kann von einer bis maximal zwei Fachkräften ausgeführt werden und zugleich ist auch kein aufwändiges und teures Hebewerkzeug, wie beispielsweise ein Autokran, zum Austausch der Schalldämpferelemente 6 erforderlich. Die Wartung der erfindungsgemäßen Schalldämpfereinrichtung 1 gestaltet sich somit deutlich einfacher und kostengünstiger.

Betrachtet man die Fig. 2, so ist erkennbar, dass die Halteeinrichtung 5 als Kulissenführung mit wenigstens zwei sich gegenüberliegenden Führungsschienen 7 und 7' ausgebildet ist, während das Schalldämpferelement 6 in die Kulissenführung beispielsweise mittels einer Rolle 8 eingreift. Bei dem linken, in Fig. 2 dargestellten Schalldämpferelement 6 greift dieses mit seinem jeweiligen oberen und unteren Randbereich in die zugehörige Führungsschiene 7 und 7' ein und ist auf diese Weise zuverlässig und leichtgängig in der Halteeinrichtung 5 geführt. Bei dem in Fig. 2 rechts dargestellten Schalldämpferelement 6 weist dieses zumindest einen untenliegende Rolle 8 auf, welche in der Führungsschiene 7 geführt ist, wobei das gesamte Schalldämpferelement 6 zusätzlich in der Führungsschiene 7'' geführt ist. Die als Aufkantung ausgebildete Führungsschiene 7" dient dabei dem erschwerten Zugang von Schmutz bzw. Staub zum absorbierenden Material 3 des Innenbereichs.

Gemäß den Darstellungen in den Fig. 1 und 2 ist die Kulissenführung, das heißt die Halteeinrichtung 5, so angeordnet bzw. ausgebildet, dass ein Entnehmen bzw. ein Einsetzen des jeweiligen Schalldämpferelementes 6 längs zum schall-und/oder schmutzführenden Kanal 2 möglich ist. Denkbar ist selbstverständlich auch, dass die Halteeinrichtung 5 so ausgebildet ist, dass eine quer zum Kanal 2 ausführbare Entnahme bzw. ein Einsetzen erfolgen kann.

Ebenso wie das schallabsorbierende Material 3 des Innenbereichs über die zugehörigen Lochplatten 4 zum schall-und/oder schmutzführenden Kanal 2 hin begrenzt ist, können derartige Lochplatten 4 auch eine randseitige Begrenzung des Schalldämpferelementes 6, beispielsweise in der Art eines Rahmens, bilden. Die Lochplatten 4 können dabei beispielsweise als metallisches Lochblech oder aus Kunststoff ausgebildet sein.

Betrachtet man die Dickenverhältnisse zwischen dem schallabsorbierenden Material 3' und dem schallabsorbierenden Material 3, welche beide bspw. als Vlies bzw. Folie ausgebildet sein können, so fällt auf, dass das schallabsorbierende Material 3' des Schalldämpferelementes 6 eine deutlich geringere Dicke aufweist, welche beispielsweise im Bereich zwischen 0,3 und 50 mm liegt. Dies gewährleistet einerseits einen zuverlässigen Schutz des schallabsorbierenden Materials 3 in dem Innenbereich vor Schmutz bzw. Staub und andererseits zugleich ein leichtes Handling beim Austausch der Schalldämpferelemente 6.

Selbstverständlich ist dabei denkbar, dass die gemäß der Fig. 2 dargestellte Halteeinrichtung 5 auch anders ausgeführt sein kann, wobei lediglich erforderlich ist, dass über die Halteeinrichtung 5 einerseits eine zuverlässige Halterung der Schalldämpferelemente 6 und andererseits einer leichter Austausch derselben gewährleistet ist. Die Halteeinrichtung 5 kann dabei beispielsweise aus Metall oder aus Kunststoff ausgebildet sein.

Von besonderem Vorteil ist eine erfindungsgemäße Schalldämpfereinrichtung 1 bei einem Einsatz in sogenannten Entstaubungsanlagen, insbesondere in Nassentstaubungsanlagen, welche üblicherweise eine hohe Schmutz- bzw. Feuchtigkeitsfracht aufweisen. Eine derartig hohe Schmutz- bzw. Feuchtigkeitsfracht führt allgemein zu einem schnellen Zusetzen des schallabsorbierenden Materials 3 und erfordert deshalb einen turnusmäßigen Austausch desselben. Durch das als Opferelement ausgebildete Schalldämpferelement 6 kann ein direkter Zutritt von Schmutz bzw. Feuchtigkeit zum Schalldämpfermaterial 3 verhindert werden, da die Schmutz- bzw. Feuchtigkeitsteilchen vorzugsweise bereits im schallabsorbierenden Material 3' des Schalldämpferelementes 6 aufgefangen und eingelagert werden. Turnusgemäß muss somit lediglich das zumindest eine Schalldämpferelement 6 ausgetauscht werden, was deutlich einfacher und damit auch kostengünstiger ist. Die Dicke des schallabsorbierenden Materials 3' im Schalldämpferelement 6 ist dabei vorzugsweise so bemessen, dass diese die anstehende Schmutz- bzw. Feuchtigkeitsfracht während einer vordefinierten Betriebsdauer problemlos aufnehmen kann und ein Übertritt von Schmutz- bzw. Feuchtigkeit in das schallabsorbierende Material 3 des Innenbereichs zuverlässig vermieden werden kann.

## Patentansprüche

1. Schalldämpfereinrichtung (1) mit zumindest einem schall-, medien- und/oder schmutzführenden Kanal (2), der an einem Innenbereich zumindest bereichsweise mit schallabsorbierendem Material (3) belegt ist, wobei
- an dem Innenbereich eine Halteeinrichtung (5) zur austauschbaren Halterung eines dem Innenbereich vorgelagerten Schalldämpferelementes (6), insbesondere einer Schallabsorbtionsplatte vorgesehen ist, und
- das Schalldämpferelement (6) als Opferelement ausgebildet ist und das schallabsorbierende Material (3) des Innenbereichs vor Feuchtigkeit und/oder Schmutz schützt.

2. Schalldämpfereinrichtung nach Anspruch 1,
**dadurch gekennzeichnet,**
**dass** das Schalldämpferelement (6) ebenfalls schallabsorbierendes Material (3') aufweist.

3. Schalldämpfereinrichtung nach Anspruch 1 oder 2,
**dadurch gekennzeichnet,**
**dass** die Halteeinrichtung (5) als Kulissenführung mit wenigstens zwei sich gegenüberliegenden Führungsschienen (7, 7') ausgebildet ist, während das Schalldämpferelement (6) in die Kulissenführung eingreifende Kulissensteine, Kufen oder Rollen (8) aufweist und über diese leichtgängig entlang der Kulissenführung verstellbar ist.

4. Schalldämpfereinrichtung nach Anspruch 3,
**dadurch gekennzeichnet,**
**dass** die Kulissenführung so angeordnet bzw. ausgebildet ist, dass ein Entnehmen bzw. ein Einsetzen des Schalldämpferelementes (6) längs oder quer zum schall-, medien- und/oder schmutzführenden Kanal (2) möglich ist.

5. Schalldämpfereinrichtung nach einem der vorhergehenden Ansprüche,
**dadurch gekennzeichnet,**
**dass** eine, dem wenigstens einen schall- und/oder schmutzführenden Kanal (2) zugewandte Seite des Innenbereichs und/oder des Schalldämpferelementes (6) eine Lochplatte (4), ein Draht- oder Kunststoffgitter oder ein Gewebe trägt.

6. Schalldämpfereinrichtung nach Anspruch 5,
**dadurch gekennzeichnet,**
- **dass** die Lochplatte (4) als metallisches Lochblech ausgebildet ist, oder
- **dass** die Lochplatte (4) aus Kunststoff ausgebildet ist.

7. Schalldämpfereinrichtung nach einem der vorhergehenden Ansprüche,
**dadurch gekennzeichnet,**
**dass** als schalldämpfendes Material (3, 3') ein mineralischer Faserwerkstoff und/oder eine Metallwolle und/oder ein Filz zum Einsatz kommt.

8. Schalldämpfereinrichtung nach einem der Ansprüche 1 bis 7,
**dadurch gekennzeichnet,**
**dass** eine Dicke des Schalldämpferelementes (6) ca. 0,3 - 50 mm beträgt.

9. Schalldämpfereinrichtung nach einem der vorhergehenden Ansprüche,
**dadurch gekennzeichnet,**
**dass** die Halteeinrichtung (5) aus Metall oder aus Kunststoff ausgebildet ist.

10. Staub- und/oder schmutzpartikelführende Anlage, insbesondere eine (Nass-)Entstaubungsanlage mit zumindest einer Schalldämpfereinrichtung (1) nach einem der vorhergehenden Ansprüche.
